(19) **Europäisches Patentamt / European Patent Office / Office européen des brevets**

(11) **EP 2 562 952 B1**

(12) **EUROPEAN PATENT SPECIFICATION**

(45) Date of publication and mention
of the grant of the patent:
**23.05.2018 Bulletin 2018/21**

(51) Int Cl.:
*H04L 1/06* $^{(2006.01)}$      *H04L 1/00* $^{(2006.01)}$

(21) Application number: **11178722.2**

(22) Date of filing: **24.08.2011**

(54) **A method and user equipment for determining channel state information**

Verfahren und Benutzervorrichtung zur Bestimmung der Kanalstatusinformation

Procédé et équipement utilisateur pour déterminer les informations d'état de canal

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.02.2013 Bulletin 2013/09**

(73) Proprietor: **BlackBerry Limited
Waterloo, ON N2K 0A7 (CA)**

(72) Inventors:
• **Gupta, Chandra-Prakash
44799 Bochum (DE)**

• **Kosakowski, Martin
44799 Bochum (DE)**
• **Zielinski, Ernst Slawomir
44799 Bochum (DE)**

(74) Representative: **Gill Jennings & Every LLP
The Broadgate Tower
20 Primrose Street
London EC2A 2ES (GB)**

(56) References cited:
**WO-A1-2008/051038    WO-A1-2011/008519
WO-A2-2011/019962    US-A1- 2009 154 588
US-A1- 2010 002 598**

**Description**

This invention relates to a method of determining channel state information (CSI) for use in link adaptation within wireless communication systems.

The process of dynamically optimising signal and protocol parameters for a given instantaneous channel condition is known as link adaptation. With the example of an enhanced Node B (eNb) base station communicating with a user equipment (UE), the link adaptation process involves the UE sending feedback information to the eNb with details of the channel conditions. By doing so, the eNb can adjust its transmission parameters to achieve the greatest throughput without surpassing a predetermined error threshold. The effectiveness of the link adaptation process is dependent on both the accuracy of this feedback information and how rapidly it can be calculated and sent. If the eNb is provided with frequent and accurate feedback information it will be able to pick the best possible transmission parameters for that moment and rapidly alter them as required.

IEEE Paper: "Link Adaptation in Linearly Precoded Closed-Loop MIMO-OFDM Systems with Linear Receivers", E. Ohlmer and G. Fettweis, 2009, uses CSI as the feedback information. CSI includes three separate indicators that are particularly useful when the wireless system is capable of utilising multiple-input multiple-output (MIMO) systems, such as those used in the Long Term Evolution (LTE) standard (or other modern wireless communication standards like HSPA+, 4G, WiMax and IEEE 802.11n). These three indicators found in CSI are:

1. Rank Indicator (RI). The RI reflects the maximum number of spatially parallel transmissions supported by the channel that can be efficiently exploited by the detector or receiver. It informs the eNb whether a higher throughput link (higher rank) should be used over a more reliable link (lower rank). The RI is an indicator of rank.
2. Precoding Matrix Indicator (PMI). The PMI signals the codebook index of the precoding matrix that should be applied at the eNb. The PMI is an indicator of precoding.
3. Channel Quality Indicator (CQI). Formerly known as modulation and coding scheme (MCS), the CQI indicates the recommended MCS selection from the given modulation (such as QPSK, 16 QAM and 64 QAM) and code rate (e.g. 1/10, 1/3, 1/2, 3/4, 9/10 etc.) alphabet. The CQI is an indicator of channel quality.

One known approach for evaluating CSI is to perform a joint CQI/PMI/RI selection. This joint CQI/PMI/RI selection is an exhaustive search which provides the optimum solution for link adaptation, such that the best combination of rank, precoding matrix and CQI values are found. As a result, the maximum throughput can be found with a block error rate (BLER) below a given threshold (less than or equal to 10% in the case of the LTE standard).

While this approach may eventually lead to the optimum choice of RI, PMI and CQI, there are a number of drawbacks which makes it unsuitable for practical implementation.

As channel conditions can vary so rapidly, in order for a link adaptation process to be effective, the CSI needs to be determined at a high frequency, with low latency. However, performing an exhaustive search, calculating every possible combination, is likely to increase the time taken to eventually calculate a CSI, by which time the channel conditions may have changed and the selected CSI may no longer be appropriate.

Additionally, as these calculations will have to be performed on the UE, power consumption is of particular importance. As UE is often battery operated, there is a need to minimise the amount of power required, so using such a processor-intensive algorithm would not be ideal in instances where power usage is to be kept at a minimum.

As the number of antennas used in MIMO systems increases, so do the number of parameters to search through, so while exhaustive searching may have been possible in the past, where the maximum rank was only two, with modern telecommunications hardware allowing for an increasing number of ranks available, the joint CQI/PMI/RI search is becoming more impractical.

Therefore there is a strong need for low complexity and low latency approaches which mitigate the drawbacks of the joint CQI/PMI/RI approach.

WO2008/051038 discloses a method of reporting downlink channel information, the method including reporting a rank for a subband and reporting a CQI for a single rank for at least one subband. The invention is carried out in accordance with the appended claims.

Examples of the present invention will now be described in detail with reference to the accompanying drawings, in which:

Figure 1 is a simplified block diagram of the processes performed in an eNb and UE implementing a link adaptation process;
Figure 2 illustrates the influence of the precoding to a communication system;
Figure 3 shows the differences in rank indication between rank indication approaches with and without precoding taken into account;
Figure 4 illustrates the relationship between diversity order and spatial multiplexing order;

Figure 5a shows a high level block diagram of the exhaustive search approach;
Figure 5b shows a high level block diagram of the proposed approach;
Figure 6 is a simplified block diagram of the processes performed in a UE incorporating the proposed approach;
Figure 7 is a flow chart visualising the proposed method of estimating CSI;
Figure 8 illustrates a proposed method of selecting M channel capacities, in which the best M capacities are chosen;
Figure 9 illustrates a proposed method of selecting M channel capacities, in which the best M-by-N capacities from each rank are selected; and,
Figure 10 illustrates a proposed method of selecting M channel capacities, in which the best M-minus-N capacities are chosen from Rank 1.

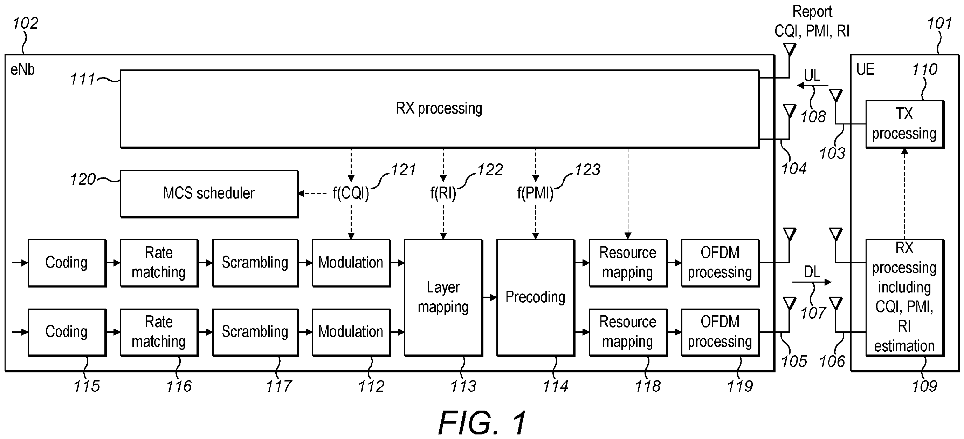

Figure 1 shows an eNb 102 in wireless communication with a UE 101 for the purpose of providing an overview of a link adaptation process for LTE. However, the link adaptation process need not be limited to the exemplary case shown, but can be between any wireless devices, such as between two UE's or two eNb's.

The UE 101 detects a signal 107, sent from the transmitting antenna(s) 105 of the eNb 102, with its own receiving antenna(s) 106. Once the signal 107 has been received, it is processed at the RX processing stage 109 by the UE 101. During this processing stage 109, the UE performs a decision on what CSI, comprising of RI, PMI and CQI, to send to the eNb 102. Once this decision has been made, these parameters are sent to the TX processing stage 110 of the UE 101, where they are transmitted to the eNb 102 via the transmitter antenna(s) 103 of the UE 101 to the receiver antenna(s) 104 of the eNb.

Upon receiving the uplink signal 108 from the UE 101, the eNb 102 processes it at the RX processing stage 111, where it extracts the RI, PMI and CQI values sent by the UE 101. Depending on the reporting mode the CQI and the PMI values reported by the UE can be either wideband (full bandwidth) related or sub-band (part of the full bandwidth) related, whereas the RI reported by the UE is always wideband related. The eNb 102 may use the extracted RI, PMI and CQI values as the transmission parameters it uses for further wireless transmissions 107 to the UE 101 by setting the parameter at the modulation stage 112 to be the received CQI value, the parameter at the layer mapping stage 113 to be the received RI value and the parameter at the precoding stage 114 to be the received PMI value. The eNb 102 may also use the received CQI value at the MCS scheduler stage 120 to more effectively schedule transmissions. With these transmission parameters received at the eNb, the data to be sent, which has already gone through the steps of coding 115, rate matching 116 and scrambling 117, is processed at the modulation 112, layer mapping 113 and precoding 114 stages with optimised transmission parameters, before entering the resource mapping 118 and OFDM processing 119 stages for sending through transmitter antenna(s) 105. The resource mapping 118 stage may also take into account the transmission parameters when mapping resources before entry into the OFDM processing 119 stage.

Rather than directly use the CQI, RI and PMI values received from the UE 101, the eNb 102, may use the result of a function (121, 122, 123) of these values to set the transmission parameters. This function may, for example, take into account the values received from other UEs, as an eNb 102 may have to schedule several UEs within its cell range at the same time, which means it cannot necessarily guarantee an optimal data schedule for each UE at any time. Therefore a result of this function may be that the value received from the UE 101 is not used at all when setting the transmission parameters.

While Figure 1 shows a UE 101 reporting recommended RI, PMI and CQI data to the eNb 102 for improved transmission from the eNb 102, there may be implementations where it is the eNb 102 that reports to the UE 101 recommended RI, PMI and CQI data for improved transmission from the UE 101. This reporting by the eNb 102 may be performed instead of the reporting by the UE 101 or in addition to.

At the RX processing stage 109 of the UE 101, RI, PMI and CQI values are estimated based on the current channel conditions as detected at the receiver antenna(s) 106 of the UE 101. In order to estimate the RI, the UE 101 determines channel matrices from the downlink signal 107 it receives from the eNb 102 and performs calculations on them.

The rank of the channel matrix may be found by determining the number of non-zero Eigen values of the matrix, giving the number of independent links the channel can support. The RX processing stage 109 may do this by simply finding the determinant of the channel matrix. It may use an alternative, condition-based approach, where the singular values of the matrix are calculated and the ratio of the maximum to minimum singular provides a condition number, which can indicate whether a channel would suffer from higher error rates with higher ranks. Both of these approaches only take channel estimates into account, and therefore the rank indication is dependent on a threshold found by extensive simulations.

An improved method of determining rank takes the signal-to-noise ratio (SNR) into account as well as channel estimates, in order to calculate channel capacities. The channel capacity is the maximum number of bits which a channel can carry under a given SNR at the receiver. In contrast to the mutual information approach of joint CQI/PMI/RI searches, the channel capacity is equal to or larger than the maximum mutual information. Therefore a simple link between channel capacity and mutual information can be defined as:

$$Cap = \max(\text{mutual information})$$

Different calculations are performed to determine channel capacity, depending on whether channel capacity is being determined for a MIMO mode (spatial multiplexing mode where rank > 1) or a transmitter diversity (TxDiversity) mode (where rank = 1).

Channel capacity is calculated for the MIMO mode by using the equation:

$$Cap_{MIMO} = \log_2\left(\det\left(\mathbf{I} + \frac{E_s}{M_T N_0} \mathbf{H}\mathbf{H}^H\right)\right) = \sum_{i=1}^{r} \log_2\left(1 + \frac{E_s}{M_T N_0} \lambda_i\right)$$

where $E_S$ is signal energy, $M_T$ is the number of transmitter antennas, $N_0$ is noise power and $\lambda_i$, are the Eigen values of channel estimates ($\mathbf{H}\mathbf{H}^H$) and r is the number of non-zero Eigen values.

To calculate channel capacities for the TxDiversity mode, the following equation is used:

$$Cap_{TxDiversity} = \log_2\left(\mathbf{I} + \|\mathbf{H}\|_F^2 \frac{E_s}{M_T N_0}\right)$$

where $\|\mathbf{H}\|_F^2 = trace(\mathbf{H}\mathbf{H}^H)$ is the Frobenius norm of the channel estimates.

In instances where sub-optimum detectors are used for receiving signals, the SNR is further reduced and with it the maximum achievable mutual information. In these instances, which in reality would be for most, post-detector SNR may be taken into account when calculating channel capacities.

The calculation for determining channel capacity of a spatial multiplexing mode where a Zero-Forcing (ZF) detector is used, employs a modified post-detector SNR value given by:

$$SNR_{ZF} = \frac{\left|\text{diag}(\mathbf{H}^H\mathbf{H})\right|}{\sigma_n^2}$$

This value for post-detector SNR is used in the following modified equation for calculating channel capacity of spatial multiplexing with a ZF detector:

$$Cap_{SM-ZF} = \sum_{i=1}^{r} \log_2\left(1 + SNR_{ZF,i}\right)$$

The calculation for determining channel capacity of a spatial multiplexing mode where a Minimum Mean Square Error (MMSE) detector is used, employs a modified post-detector SNR value given by:

$$SNR_{MMSE} = \frac{1}{\left|\text{diag}(\mathbf{I} - \mathbf{W}\mathbf{H})\right|}$$

where,

$$\mathbf{W} = (\mathbf{H}^H\mathbf{H} + \sigma_n^2 * \mathbf{I})^{-1}\mathbf{H}^H$$

This value for post-detector SNR is used in the following modified equation for calculating channel capacity of spatial multiplexing with a MMSE detector:

$$Cap_{SM-MMSE} = \sum_{i=1}^{r} \log_2 \left(1 + SNR_{MMSE,i}\right)$$

Different from detector independent strategies, these rank indication strategies, which take the SNR and the receiver capabilities (post equaliser SNR) into account, represent more accurate RI strategies.

Therefore, for each given transmission scenario, the RX processing stage 109 determines a theoretical channel capacity for either MIMO or TxDiversity modes or both. Where the maximum rank the wireless network can support is 2 (such as the case where there are only two antennas at both the receiver and transmitter), by comparing channel capacities for MIMO and TxDiversity modes, a decision is made as to whether the current channel can support spatial multiplexing (SM) or TxDiversity mode. The TxDiversity mode is more reliable than SM mode at the expense of a lower data rate, hence its capacity is usually lower.

However, the wireless networks may allow for ranks above 2, in some instances 4 and in others even higher. The proposed approach is capable of choosing between more than two choices of rank as will be described later, but to illustrate the underlying methods, examples involving a choice between two ranks are used.

By taking into account the equalizer post SNR, a pre-calculation is performed. This additional computational process may be simplified in order to reduce the complexity and also the latency of the whole process. By indirectly using the Eigen value decomposition of the channel row correlation ($\mathbf{HH}^H$), the channel capacity calculation for MIMO and TxDiversity can be further simplified such that their difference can be given by:

$$\log_2 \left( \frac{1 + \mathrm{trace}(\mathbf{HH}^H)SNR + \det(\mathbf{HH}^H)SNR^2}{1 + \mathrm{trace}(\mathbf{HH}^H)SNR} \right)$$

In the instance where the hardware allows a maximum of two ranks, the rank indication is a hard decision between 1 and 2 and may be done using a threshold $T_{cap}$, simplifying to:

$$\det(\mathbf{HH}^H)SNR^2 - (2^{T_{cap}} - 1)(1 + \mathrm{trace}(\mathbf{HH}^H)SNR) > 0$$

For simplification, the representation $(2^{T_{cap}} - 1)(1 + \mathrm{trace}(\mathbf{HH}^H)SNR)$ is substituted by $fct_T(\mathbf{H}, SNR, T_{cap})$, and using the above relations a new representation of the rank indication may be used:

$$RI = \mathrm{rank}(\mathbf{HH}^H) = \begin{cases} 1 \text{ if } \det(\mathbf{HH}^H)SNR^2 - fct_T(\mathbf{H}, SNR, T_{cap}) \le 0 \\ 2 \text{ if } \det(\mathbf{HH}^H)SNR^2 - fct_T(\mathbf{H}, SNR, T_{cap}) > 0 \end{cases}$$

In this relation, the function $fct_T(\mathbf{H}, SNR, T_{cap})$ represents a 'parameterizable threshold function' for the rank indication. This threshold function may also include the performance loss of the implemented detector type and is pre-calculated where the results are stored in a look-up-table. This approach offers a simple and faster RI process compared with the previous RI strategies because the post-SNR is not calculated each time, but looked up instead.

Therefore this allows for a simple, fast decision to be made as to whether rank 1 or rank 2 should be used. In one embodiment, when there is a low SNR and it is unlikely that MIMO would be supported, this quick pre-calculation can be performed to confirm that rank 1 should be used, rather than search through all the capacities of higher ranks.

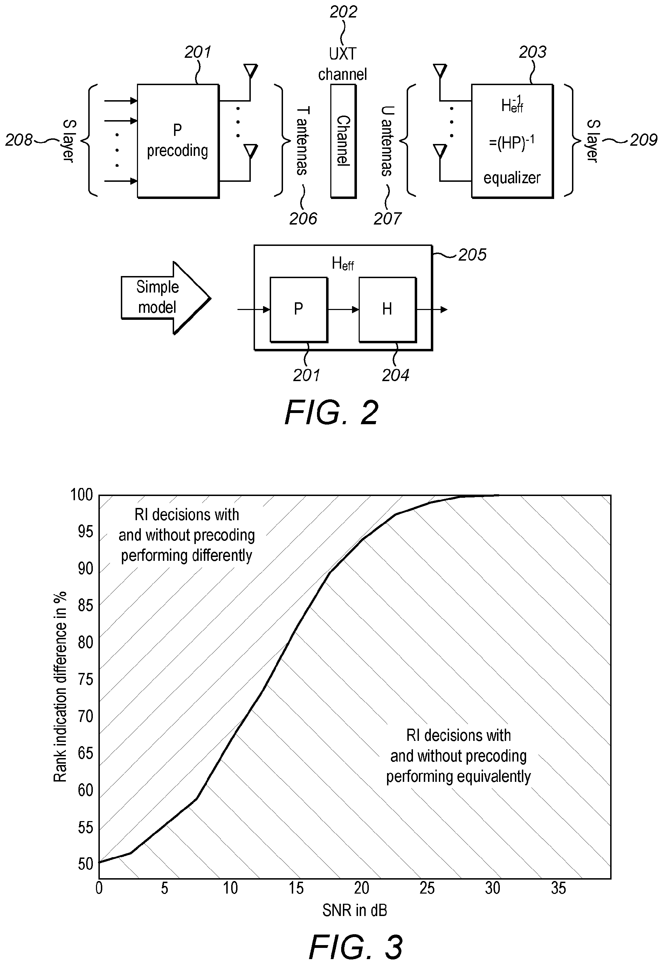

Figure 2 illustrates how precoding affects the communication system. The precoding 201 distributes the S layers 208 to the T transmitting antennas 206 with different weightings. As this precoding step 201 occurs before transmission through the channel to the receiver, the channel matrix 204 will be altered such that rather than S inputs, there will only be T inputs, therefore changing the original channel matrix 204. As a result, the signal sent over the channel 202 to the U antennas 207 of the receiver 203 is dependent on both the physical channel matrix and the precoding matrix. Therefore, in order to take precoding 201 into account, an effective channel matrix 205 is considered instead of the physical channel matrix. The effective channel matrix 205 is given by multiplying the transmitter signal with the i-th precoding matrix index $\mathbf{P}_i$ at the transmitter end. As such, the channel capacity calculations are modified to use the effective channel capacity 205 given by:

$$\mathbf{H}_{eff,SM,i} = \mathbf{HP}_{SM,i}$$

where $i=1,...,N_P$

$$h_{eff,TxDiversity,i} = \mathbf{HP}_{TxDiversity,i}$$

where $i=1,...,N_P$

The calculations for channel capacity simply substitute the **H** 204 with $\mathbf{H}_{eff}$ 205, to include the effects of precoding. Therefore the resulting MIMO and TxDiversity capacities are:

$$Cap_{MIMO,i} = \log_2\left(\det\left(\mathbf{I} + \frac{E_s}{M_T N_0}\mathbf{H}_{eff,SM,i}\mathbf{H}_{eff,SM,i}^H\right)\right) \quad, i = 1,...,N_P$$

$$Cap_{TxDiversity,i} = \log_2\left(1 + h_{eff,TxDiversity,i}^2 \frac{E_s}{M_T N_0}\right) \quad, i = 1,...,N_P$$

Figure 3 demonstrates the importance of including precoding in the calculation of channel capacities. Above an SNR or 30dB in the medium correlation case, including precoding in the calculations has no effect on rank indication. However, as SNR drops below 30dB, the rank indication diverges from the rank indication including strategies that take precoding into account. Therefore for low SNR, the precoding calculation cannot be skipped to improve computational efficiency without reducing the accuracy of the rank indication.

The above method, which combines rank and precoding calculations, can be further adapted for when the hardware of the wireless network is capable of ranks greater than 2. Each transmission mode (TxDiversity, MIMO rank = 2, MIMO rank = 3 etc.) use different precoding matrices depending on the rank and so the number of used layers for that transmission mode changes. Therefore there will be a separate set of channel capacities calculated for each transmission mode:

$$Cap = \left\{Cap_{TxDiv}, Cap_{MIMO,Rank=2}, Cap_{MIMO,Rank=3},...,Cap_{MIMO,\min(T,U)}\right\}$$

As the robustness for each of these modes are not equal, each capacity above rank = 1 includes a rank dependent penalty (loss):

$$Cap = \left\{Cap_{TxDiv}, Cap_{MIMO,Rank=2} - T_2, Cap_{MIMO,Rank=3} - T_3,...,Cap_{MIMO,\min(T,U)} - T_{\min(T,U)}\right\}$$

These penalty levels may be fixed or adaptive and are found from statistical models or simulations.

From this list of calculated channel capacities, the best M of these candidates are selected for the next processing stage, where CQI is estimated.

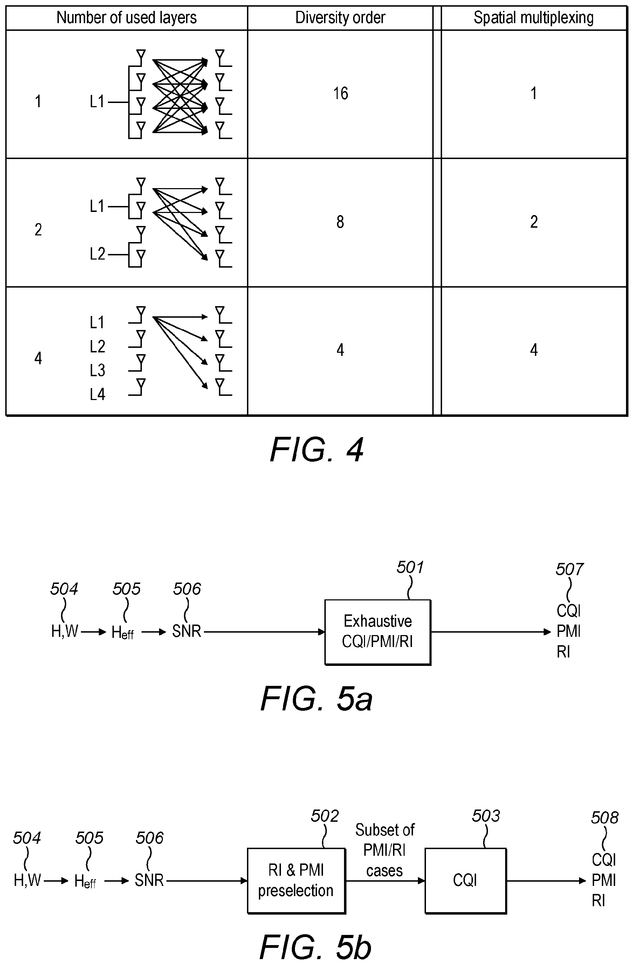

When sorting the capacities of all the ranks, it is normally the rank that determines the order. As illustrated in Figure 4, this is due to the fact that the diversity order of each TX mode decreases as the number of layers increase (i.e the rank) for different data streams, whereas the spatial multiplexing gain increases with the number of used layers for different data streams. So with more layers used, there is greater spatial multiplexing, leading to a larger quantity of data that can be sent, and as diversity order decreases the robustness does as well, as fewer repeated signals sent. As an example, the final order of the resulting capacities may show that the maximum capacity for each rank increases up to a certain rank i, at which point the maximum capacity for each rank actually decreases, because at rank i the spatial multiplexing is high enough to achieve a large data rate without the diversity order being so low as to reduce the reliability and therefore start reducing the data rate.

With this knowledge, the proposed approach can be further improved. As it is expected that each successive increase in rank will result in an increase in the maximum channel capacity for that rank, when there is actually a decrease in the maximum channel capacity, it is known that any further increase in rank will only result in further decreases in maximum channel capacity. Therefore, the search process for better capacities in higher ranks can be stopped early. Alternatively, in the case where the channel capacities are similar, the search process can be brought to a lower priority rather than terminated outright, such that is allocated fewer system resources.

Figures 5a and 5b illustrate a high level difference between the proposed approach and the known joint CQI/PMI/RI approach (exhaustive search). While in the exhaustive approach 501 shown in Figure 5a, every possible combination of CQI, PMI and RI are used to determine the best combination of values 507, the proposed approach, as shown in Figure 5b, performs a preselection of RI and PMI first 502, sends a subset of these cases to the CQI generator 503 where the best combination of CQI and the subset of PMI and RI values 508 is determined. This subset contains only M values, where M is some predetermined integer. The illustrated methods can use the starting point of determining the channel matrix and precoding matrix 504, which are used to calculate the effective channel matrix 505, which itself is used to determine the SNR 506.

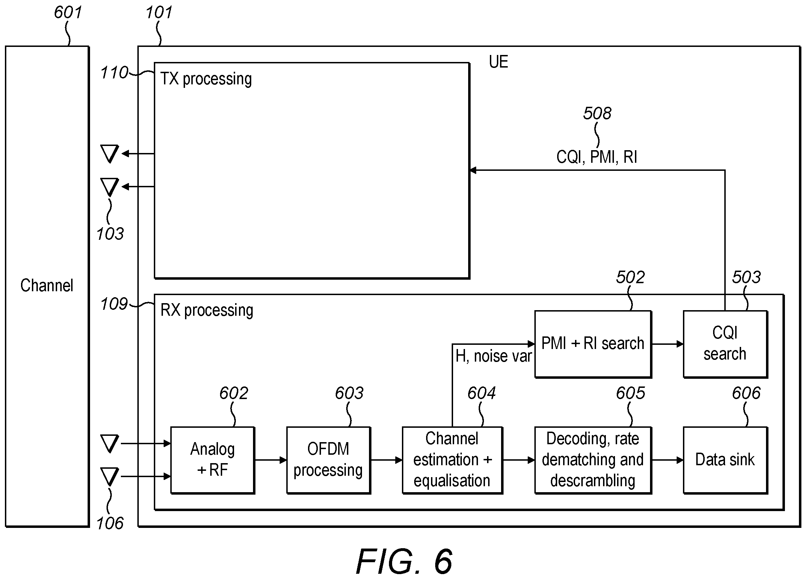

Figure 6 shows the UE 101 of Figure 1 which has been modified to implement the proposed approach for determining CSI shown in Figure 5b. Here a signal is received from the eNb 102 through the channel 601 by the receiver antennas 106 of the UE 101. The raw signal passes through an analogue and RF stage 602 before proceeding through OFDM processing 603. At stage 604, channel estimation and equalisation is performed to estimate the H matrices and noise variance of the received signal. The useful data within the signal is further processed by continuing to stage 605 where the signal is decoded and rate dematching and descrambling is performed, before the final data is extracted to the data sink 606. The estimated H matrices and noise variance found in 604 are passed to the PMI and RI search stage 502. Here the M PMI and RI values associated with the M best channel capacities are determined and are used when determining the optimum CQI at stage 503. Once the optimum combination of CQI, PMI and RI 508 are determined, they are passed to the TX processing stage 110 where they will be fed back to the eNb 102 through the channel 601 via the UE's 101 transmit antenna(s) 103. All three values of CQI, PMI and RI 508 do not necessarily have to be fed back to the eNb 102 at the same time. For example, the RI values does not have to be sent at the same time as the CQI and PMI values as typically, RI can be reported less often as the appropriate number of layers normally varies on a slower basis than the channel variations that impact the choice of precoder matrix and MCS.

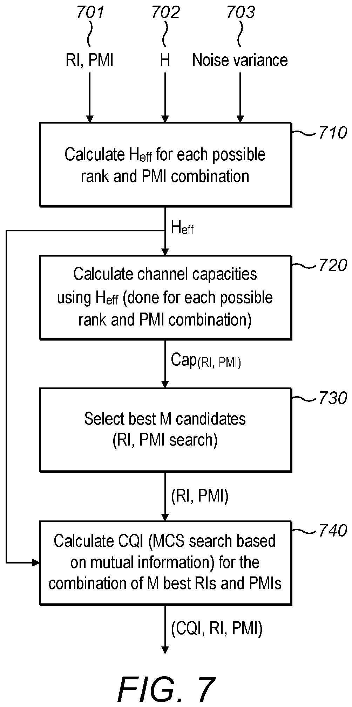

Figure 7 shows a more detailed flow chart visualising the steps involved in the proposed method of determining CSI. At step 710, on receiving estimated channel matrices H 702, noise variances 703 and all the RIs and PMIs 701 available, effective channel matrices $H_{eff}$ are calculated for each possible combination of rank and PMI. These effective channel matrices are used in step 720 where channel capacities are calculated for each of the possible combinations of rank and PMI. All these channel capacities are then processed in step 730, where the best M of these channel capacities are selected and the corresponding RI and PMI values are processed in step 740. At step 740 the from these M RI and PMI values, the optimum combination of CQI, RI and PMI is selected so as to achieve the maximum data rate while keeping the BLER below a certain threshold (in the case of LTE, 10%).

To illustrate an exemplary implementation of the proposed approach, we provide the following scenario: In this scenario, a wireless network supports up to a maximum of rank = 4 and there are 16 different PMI's possible per layer, resulting in 64 different PMI cases in total. In this scenario, there is a 20MHz bandwidth, corresponding to 1,200 subcarriers. If an H matrix is provided for every 3rd subcarrier, there will be 400 H matrixes available for processing per subframe.

As a result, step 710 will multiple the 400 H matrices with the 64 PMI cases to calculate 25,600 effective channel matrices. For each of the individual PMI, the 400 effective channel matrices result in 400 SNR values.

At step 720 the capacities for these 400 SNR and effective channel matrices are calculated and accumulated into a single theoretical channel capacity value per PMI, resulting in 16 theoretical channel capacities calculated per rank.

At step 730, a subset of M of these calculated theoretical channel capacities are selected. The manner of this selection is described later. In this scenario M is chosen to be 8 and it is the highest M channel capacities that are selected for this subset.

At step 740, the RI and PMI values associated with these M selected channel capacities are passed on for further processing to find the optimum CQI index. This involves mapping the SNR values associated with these values to an "SNR-to-RBIR" table which represents the curves for QPSK, QAM16 and QAM64 modulation to form RBIR triplets. Data rates are calculated for each of these RBIR triplets and the combination of CQI, RI and PMI associated with the highest data rate with a BLER less than or equal to 10% is selected.

If this same scenario were performed with an exhaustive search approach, the number of PMI/RI candidates selected for CQI post processing would be 64, rather than the M for the proposed approach.

In step 720 of Figure 7, while the exhaustive search approach calculates the received bit mutual information rate (RBIR) from the combinations of rank and PMI, the proposed approach calculates channel capacity instead from the combinations of rank and PMI. As seen from the above examples, calculating channel capacities requires fewer computations than calculating RBIRs as they do not take modulation order into account. Unlike the exhaustive search approach, the RI and PMI search is separated from the CQI calculation and therefore there is no need to consider modulation order at the RI/PMI search stage, thus improving computational efficiency. Once a limited subset of RI/PMI values has been found, the mutual information can then be used to determine an optimum combination of CQI/PMI/RI values. The term 'optimum' is not limited to mean the absolute best combination of CQI/PMI/RI, but rather, given the information available, what the system estimates the best combination to be. The proposed approach uses a maximum likelihood estimation and attempts to find an optimum or close to optimum combination without going through every possible combination.

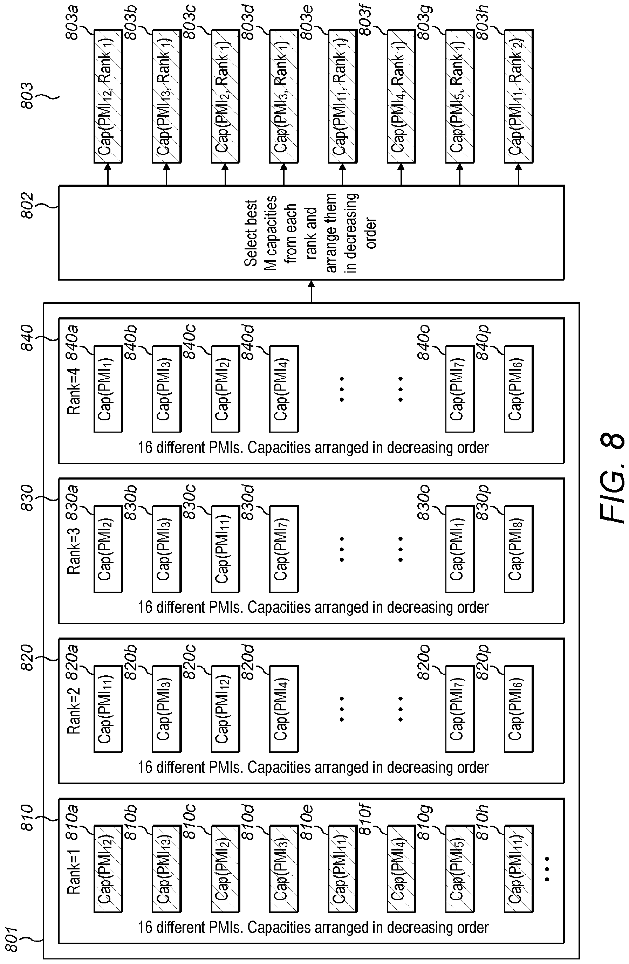

At step 730 of Figure 7, the best M candidates for RI and PMI are selected. One method of selecting the best M candidates is to pick the highest M calculated capacities, regardless of their rank and send them on to the CQI calculation stage. Figure 8 illustrates this process where, from a selection of all calculated capacities 801, the selection stage 802 picks out the best M capacities 803a to 803h for sending on to the CQI generator. In the example illustrated in Figure 8, there are 16 different PMIs for each rank, and therefore there are 16 calculated channel capacities for rank = 1 (810), rank = 2 (820), rank = 3 (830) and rank = 4 (840). However, using this method, there is a possibility that the highest calculated channel capacities are all in one rank, specifically rank = 1. Figure 8 illustrates such an instance, where all M = 8 candidates selected (803a to 803h) are from rank 1 (810a to 810h) as these were the highest capacities calculated. In the scenario where this occurs, unnecessary calculations of higher ranks can be avoided using methods disclosed earlier, involving checking if the highest channel capacity of rank = 2 is less than the highest channel capacity of rank = 1, in which case calculations of channel capacities for higher ranks like rank = 3 or 4 should be skipped or lowered in priority.

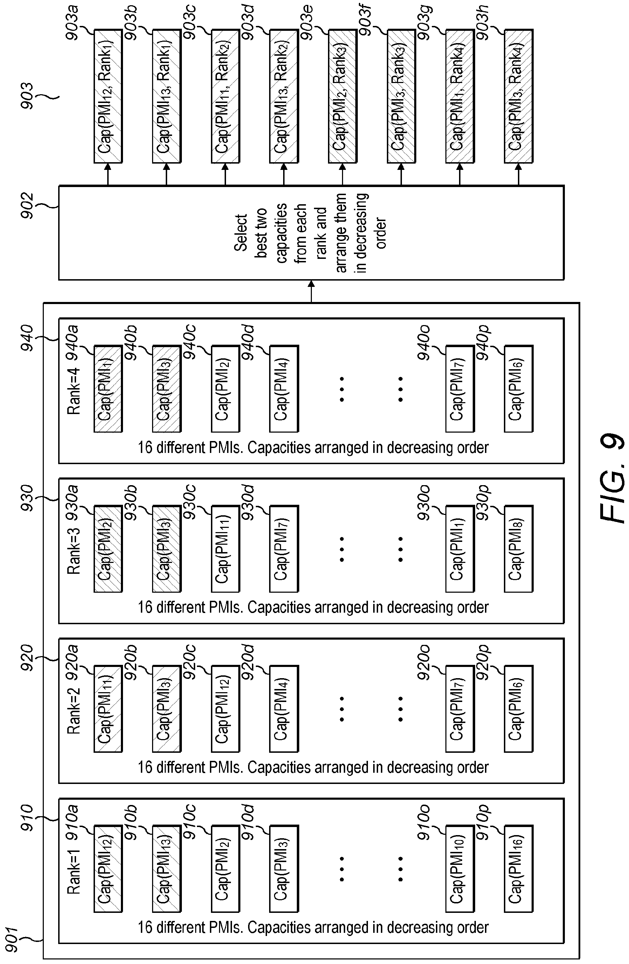

An alternative method, known as the "Best M by N" method is illustrated in Figure 9. With this method only the best M ÷ N capacities of each rank are selected at the selection stage 902, so that there is an even distribution of channel capacities selected from the ranks. As shown in Figure 9, where N = 4 and M = 8, the top two capacities from each rank are selected (910a, 910b, 920a, 920b, 930a, 930b, 940a, 940b), thus avoiding the scenario where all the selected capacities are from a single rank.

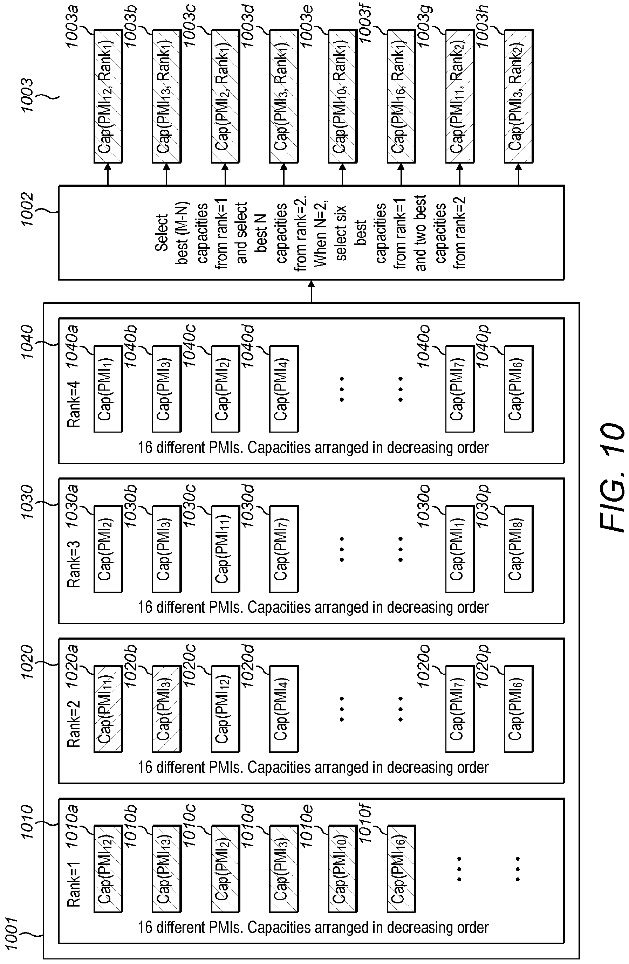

A further alternative for selecting M candidates is a mixture of the previous two and is illustrated in Figure 10. In this method, the best (M minus N) capacities (1010a, 1010b, 1010c, 1010d, 1010e, 1010f) are selected only from rank 1 (1010), and the best N capacities from the remaining higher ranks are selected (1020a, 1020b) at the selection stage 1002. This method may be further modified such that the best N capacities are selected from specific ranks rather than any of the higher ranks, for example selecting N only from rank 2 as demonstrated in Figure 10, where M = 8 and N = 2. This method ensures that not all the candidates selected are from the same rank, but imposes a bias as to which rank to select from.

In the instance where the value for M is chosen to be the same as the total number of calculated channel capacities, an advantage of the proposed approach over the exhaustive search of previous approaches is lost. Therefore M is chosen to be less than the total number of calculated channel capacities.

Additionally, M could be chosen to be 1, such that only the best combination of PMI and RI is used for calculating the CQI. However, such a value for M would result in a less accurate overall result. As the process is split into two main stages, first the joint RI/PMI selection, followed by the CQI calculation, in order to ensure maximum accuracy, the first stage should be as accurate as possible and so should provide the CQI calculator with more than a single choice. Therefore M should be chosen to be greater than 1 and less than the total number of calculated channel capacities.

## Claims

1. A method of estimating channel state information, CSI, for a communication channel comprising:

   calculating a number of theoretical channel capacities, wherein the calculating comprises calculating channel matrices from combinations of values of a rank indication, RI, and a precoding matrix index, PMI;
   selecting a plurality M of said theoretical channel capacities and their associated values of the RI and PMI; and,
   determining an optimum combination of values of an indicator of channel quality, the RI and the PMI, from the selected M values of the RI and the PMI, wherein the indicator of channel quality indicates the recommended modulation and coding scheme, MCS, selection, and wherein the determining an optimum combination of values comprises finding values of the indicator of channel quality, RI and PMI associated with a maximum data rate with a block error rate below a predetermined threshold.

2. The method of claim 1, wherein the step of calculating theoretical channel capacities is dependent on post-detector SNR values.

3. The method of claim 1 or 2, wherein the M theoretical channel capacities are the largest M theoretical channel capacities.

4. The method of claim 1 or 2, wherein the M theoretical channel capacities are the largest M / N capacities from each rank, where N≤M.

5. The method of claim 1 or 2, wherein the M theoretical channel capacities includes the largest M-N capacities from a specified rank and the remaining largest N capacities from adjacent ranks, where N<M.

6. The method of any preceding claim, wherein M is greater than 1 and less than the total number of theoretical channel capacities.

7. The method of any preceding claim, wherein the predetermined threshold in 10%.

8. The method of any preceding claim, wherein the MCS selection is performed on the M theoretical channel capacities in decreasing order.

9. The method of any preceding claim, wherein the step of calculating theoretical channel capacities is terminated if the highest theoretical channel capacity associated with rank i+1 is lower than the highest theoretical channel capacity associated with rank i.

10. The method of any preceding claim, wherein the step of calculating theoretical channel capacities comprises utilising pre-calculated results stored in a look-up table.

11. The method of any preceding claim, further comprising the step of transmitting the determined optimum combination of values.

12. A method according to any preceding claim, when implemented by a user equipment connected to a wireless LTE network.

13. The method of any preceding claim, wherein the indicator of channel quality is channel quality indicator, CQI.

14. A user equipment comprising computer executable instructions for performing the method of any preceding claim when executed on a computer.


**Patentansprüche**

1. Verfahren zum Schätzen von Kanalzustandsinformationen, CSI, für einen Kommunikationskanal, das Folgendes umfasst:

Berechnen einer Anzahl theoretischer Kanalkapazitäten, wobei das Berechnen das Berechnen von Kanalmetriken aus Kombinationen von Werten einer Rangangabe, RI, und eines Vorcodierungsmatrixindex, PMI, umfasst;
Auswählen einer Mehrzahl M aus den theoretischen Kanalkapazitäten und ihrer zugeordneten Werte der RI und des PMI; und,
Bestimmen einer optimalen Kombination von Werten eines Indikators der Kanalqualität, der RI und des PMI aus den ausgewählten M Werten der RI und des PMI, wobei der Indikator der Kanalqualität die empfohlene Modulations- und Codierungsschema-Auswahl, MCS-Auswahl, angibt, und wobei das Bestimmen einer optimalen Kombination von Werten das Finden von Werten des Indikators der Kanalqualität, der RI und des PMI, die einer maximalen Datenrate mit einer Blockfehlerrate unterhalb eines vorbestimmten Schwellenwerts zugeordnet sind, umfasst.

2. Verfahren nach Anspruch 1, wobei der Schritt des Berechnens theoretischer Kanalkapazitäten von Post-Detektor-SNR-Werten abhängt.

3. Verfahren nach Anspruch 1 oder 2, wobei die M theoretischen Kanalkapazitäten die größten M theoretischen Kanalkapazitäten sind.

4. Verfahren nach Anspruch 1 oder 2, wobei die M theoretischen Kanalkapazitäten die größten M/N-Kapazitäten aus jedem Rang sind, mit N ≤ M.

**5.** Verfahren nach Anspruch 1 oder 2, wobei die M theoretischen Kanalkapazitäten die größten M - N Kapazitäten aus einem spezifizierten Rang und die verbleibenden N Kapazitäten aus benachbarten Rängen sind, mit N < M.

**6.** Verfahren nach einem der vorhergehenden Ansprüche, wobei M größer als 1 und kleiner als die Gesamtzahl theoretischer Kanalkapazitäten ist.

**7.** Verfahren nach einem der vorhergehenden Ansprüche, wobei der vorbestimmte Schwellenwert 10 % ist.

**8.** Verfahren nach einem der vorhergehenden Ansprüche, wobei die MCS-Auswahl auf den M theoretischen Kanalkapazitäten in absteigender Reihenfolge ausgeführt wird.

**9.** Verfahren nach einem der vorhergehenden Ansprüche, wobei der Schritt zum Berechnen theoretischer Kanalkapazitäten beendet wird, falls die höchste theoretische Kanalkapazität, die dem Rang i + 1 zugeordnet ist, niedriger ist als die höchste theoretische Kanalkapazität, die dem Rang i zugeordnet ist.

**10.** Verfahren nach einem der vorhergehenden Ansprüche, wobei der Schritt zum Berechnen theoretischer Kanalkapazitäten das Benutzen von im Voraus berechneten Ergebnissen, die in einer Nachschlagtabelle gespeichert sind, umfasst.

**11.** Verfahren nach einem der vorhergehenden Ansprüche, das ferner den Schritt zum Übertragen der bestimmten optimalen Kombination von Werten umfasst.

**12.** Verfahren nach einem der vorhergehenden Ansprüche, wenn es durch ein Anwendergerät, das mit einem drahtlosen LTE-Netz verbunden ist, implementiert ist.

**13.** Verfahren nach einem der vorhergehenden Ansprüche, wobei der Indikator der Kanalqualität der Kanalqualitätsindikator, CQI, ist.

**14.** Anwendergerät, das computerausführbare Anweisungen zum Ausführen des Verfahrens nach einem der vorhergehenden Ansprüche, wenn sie auf einem Computer ausgeführt werden, umfasst.

**Revendications**

**1.** Procédé d'estimation d'informations d'état de canal, CSI, pour un canal de communication consistant à :

calculer un nombre de capacités de canal théoriques, où le calcul consiste à calculer des matrices de canal à partir de combinaisons de valeurs d'une indication de rang, RI, et d'un indice de matrice de précodage, PMI ; sélectionner une pluralité M desdites capacités de canal théoriques et leurs valeurs associées de la RI et du PMI ; et, déterminer une combinaison optimale de valeurs d'un indicateur de qualité de canal, de la RI et du PMI, à partir des M valeurs sélectionnées de la RI et du PMI, où l'indicateur de qualité de canal indique la sélection de schéma de modulation et de codage, MCS, recommandée, et où la détermination d'une combinaison optimale de valeurs consiste à trouver des valeurs de l'indicateur de qualité de canal, de la RI et du PMI associées à un débit de données maximal avec un taux d'erreur de bloc inférieur à un seuil prédéterminé.

**2.** Procédé de la revendication 1, dans lequel l'étape de calcul de capacités de canal théoriques dépend de valeurs de SNR post-détecteur.

**3.** Procédé de la revendication 1 ou 2, dans lequel les M capacités de canal théoriques sont les M plus grandes capacités de canal théoriques.

**4.** Procédé de la revendication 1 ou 2, dans lequel les M capacités de canal théoriques sont les M/N plus grandes capacités à partir de chaque rang, où N≤M.

**5.** Procédé de la revendication 1 ou 2, dans lequel les M capacités de canal théoriques comportent les M-N plus grandes capacités à partir d'un rang spécifié et les N plus grandes capacités restantes à partir des rangs adjacents, où N<M.

6. Procédé de l'une des revendications précédentes, dans lequel M est supérieur à 1 et inférieur au nombre total de capacités de canal théoriques.

7. Procédé de l'une des revendications précédentes, dans lequel le seuil prédéterminé est de 10 %.

8. Procédé de l'une des revendications précédentes, dans lequel la sélection de MCS est effectuée sur les M capacités de canal théoriques dans l'ordre décroissant.

9. Procédé de l'une des revendications précédentes, dans lequel l'étape de calcul des capacités de canal théoriques est terminée si la capacité de canal théorique la plus élevée associée au rang i+1 est inférieure à la capacité de canal théorique la plus élevée associée au rang i.

10. Procédé de l'une des revendications précédentes, dans lequel l'étape de calcul des capacités de canal théoriques comprend l'utilisation de résultats pré-calculés stockés dans une table de consultation.

11. Procédé de l'une des revendications précédentes, comprenant en outre l'étape qui consiste à transmettre la combinaison optimale déterminée de valeurs.

12. Procédé selon l'une des revendications précédentes, lorsqu'il est mis en oeuvre par un équipement utilisateur connecté à un réseau LTE sans fil.

13. Procédé de l'une des revendications précédentes, dans lequel l'indicateur de qualité de canal est un indicateur de qualité de canal, CQI.

14. Équipement utilisateur comprenant des instructions exécutables par ordinateur pour effectuer le procédé de l'une des revendications précédentes lorsqu'il est exécuté sur un ordinateur.

*FIG. 1*

FIG. 2

FIG. 3

| Number of used layers | | Diversity order | Spatial multiplexing |
|---|---|---|---|
| 1 | L1 | 16 | 1 |
| 2 | L1 L2 | 8 | 2 |
| 4 | L1 L2 L3 L4 | 4 | 4 |

*FIG. 4*

*504* *505* *506*

H,W → $H_{eff}$ → SNR —

*501*

Exhaustive CQI/PMI/RI

*507*

CQI PMI RI

*FIG. 5a*

*504* *505* *506*

H,W → $H_{eff}$ → SNR —

*502*

RI & PMI preselection

Subset of PMI/RI cases →

*503*

CQI

*508*

CQI PMI RI

*FIG. 5b*

FIG. 6

*701*     *702*     *703*

RI, PMI     H    Noise variance

Calculate $H_{eff}$ for each possible rank and PMI combination    ～*710*

$H_{eff}$

Calculate channel capacities using $H_{eff}$ (done for each possible rank and PMI combination)    ～*720*

$Cap_{(RI, PMI)}$

Select best M candidates (RI, PMI search)    ～*730*

(RI, PMI)

Calculate CQI (MCS search based on mutual information) for the combination of M best RIs and PMIs    ～*740*

(CQI, RI, PMI)

*FIG. 7*

**FIG. 8**

*FIG. 9*

FIG. 10

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008051038 A

**Non-patent literature cited in the description**

- Link Adaptation in Linearly Precoded Closed-Loop MIMO-OFDM Systems with Linear Receivers. **E. OHLMER ; G. FETTWEIS.** IEEE Paper. 2009